# EUROPÄISCHE PATENTANMELDUNG

(11) **EP 2 105 858 A1**
(43) Veröffentlichungstag der Anmeldung: **30.09.2009**
(21) Anmeldenummer: 08006002.3
(22) Anmeldetag: 28.03.2008
(51) Int. Cl.: G06F 21/24

(54) **Verfahren zur Erzeugung einer digitalen Kopie handschriftlich erzeugter Informationen**

(71) Anmelder: SRS-Management GmbH, 64625 Bensheim (DE)
(72) Erfinder: Strauss Thomas, 60487 Frankfurt am Main (DE); Homilius Detlev, 64625 Bensheim (DE); Knippel Peter, 63322 Rödermark (DE); Ritter Bernhard, 64625 Bensheim (DE)
(74) Vertreter: Katscher Habermann Patentanwälte

(57) **Zusammenfassung**

Bei einem Verfahren zur Erzeugung einer mit einer elektronischen Signatur versehenen digitalen Kopie handschriftlich erzeugter Informationen, wobei die elektronische Signatur die Übereinstimmung der digitalen Kopie mit den handschriftlichen Informationen bestätigt, werden die handschriftlichen Informationen mit einem Digitalstift (1) auf einem digitalen Papier (2) erzeugt und anschließend von dem Digitalstift (1) an eine EDV-Einrichtung (4) übertragen, mittels derer die digitale Kopie und deren elektronische Signatur erzeugt wird. In einem Zwischenschritt wandelt die EDV-Einrichtung (4) die von dem Digitalstift (1) erhaltenen handschriftlichen Informationen in maschinenlesbare Informationen um und erzeugt die digitale Kopie unter Verwendung der maschinenlesbaren Informationen. Die maschinenlesbaren Informationen werden einer automatisierten Inhaltskontrolle unterzogen. Die handschriftlichen Informationen werden in mehreren Informationseinheiten von dem Digitalstift (1) an die EDV-Einrichtung (4) übermittelt und zu einer digitalen Kopie zusammengesetzt. Die digitale Kopie enthält zusätzlich zu den handschriftlichen Informationen vorgebare Formularinformationen.

## Beschreibung

Die Erfindung betrifft ein Verfahren zur Erzeugung einer mit einer elektronischen Signatur versehenen digitalen Kopie handschriftlich erzeugter Informationen, wobei die digitale Kopie in einem vorgebbaren Format erzeugt wird und wobei die elektronische Signatur die Übereinstimmung der digitalen Kopie mit den handschriftlichen Informationen bestätigt.

Mit der zunehmenden Verfügbarkeit leistungsfähiger und kostengünstiger elektronischer Archivierungssysteme lassen sich immer größere Datenmengen, die bislang in Papierform erzeugt und über einen langen Zeitraum verwaltet wurden, auch in elektronischer Form archivieren. Die Vorteile elektronischer Archive sind unter anderem deren geringer Raumbedarf und die schnelle und weltweite Verfügbarkeit der archivierten Informationen.

Die Erzeugung eines digitalen Archivs kann allerdings mit einem erheblichen Aufwand verbunden sein. Wenn die zu archivierenden Informationen in Papierform vorliegen, so muss das zu archivierende Dokument zunächst digitalisiert und in eine digitale Kopie des Dokumentes umgewandelt werden, bevor eine elektronische Archivierung möglich ist. Als digitale Kopie wird dabei jede maschinenlesbare digitale Verkörperung angesehen, welche den relevanten Informationsgehalt des Ausgangsdokuments wiedergeben kann. Digitale Kopien werden oftmals in einem standardisierten Format wie beispielsweise dem PDF-, TIFF- oder dem XML-Format erzeugt, so dass eine möglichst einfache Darstellung und gegebenenfalls erforderliche Weiterverarbeitung der in der digitalen Kopie gespeicherten Informationen über einen langen Zeitraum gewährleistet werden kann.

Enthalten die zu archivierenden Dokumente beispielsweise in rechtlicher Hinsicht relevante Informationen, die bislang eine sorgfältige Aufbewahrung der Dokumente zu Nachweiszwecken erforderlich machten, so können die digitalen Kopien dieser Dokumente mit elektronischen Signaturen versehen werden, welche die Übereinstimmung der digitalen Kopien mit den jeweils zugeordneten Dokumenten bestätigen. Zu diesem Zweck wurden elektronische Bilderfassungsgeräte bzw. Scaneinrichtungen entwickelt, die ausgehend von den in Papierform zugeführten Dokumenten jeweils digitale Kopien dieser Dokumente erstellen und mit einer elektronischen Signatur die Übereinstimmung der digitalen Kopie mit den zugeordneten Dokumenten bestätigen. Die Dokumente können dann unmittelbar nach dem Scanvorgang vernichtet werden. Die Übereinstimmung der verbleibenden digitalen Kopie mit dem eingescannten Dokument bei Verwendung geeigneter elektronischer Signaturen ist derart zuverlässig nachgewiesen und kann über einen ausreichend langen Zeitraum belegt werden, so dass auch in Bereichen mit hohen Anforderungen an die Rechtsverbindlichkeit und Rechtssicherheit der ursprünglich erzeugten Papierdokumente, wie beispielsweise bei Versicherungen und Banken, zunehmend elektronische Archive verwendet werden und auf eine Archivierung der ursprünglich erzeugten Dokumente in Papierform verzichtet wird.

Da die zu archivierenden Dokumente jedoch in Papierform den elektronischen Archivierungssystemen zugeführt werden müssen, ist die Erzeugung einer digitalen Kopie ein zeitaufwendiges und oftmals mehrere Tage dauerndes Verfahren. Aus Gründen der Rechtssicherheit werden die digitalen Kopien üblicherweise zuerst erzeugt und elektronisch signiert, bevor anschließend eine oftmals manuelle Erfassung der in der digitalen Kopie enthaltenen Informationen und deren Umwandlung in maschinenlesbare und damit mittels einer Software weiter verarbeitbare Informationen erfolgt.

Aufgabe der vorliegenden Erfindung ist es, ein Verfahren der eingangs genannten Gattung so auszugestalten, dass eine mit einer elektronischen Signatur versehene digitale Kopie handschriftlich erzeugter Informationen möglichst schnell und kostengünstig erstellt werden kann.

Diese Aufgabe wird erfindungsgemäß dadurch gelöst, dass die handschriftlichen Informationen mit einem Digitalstift auf digitalem Papier erzeugt und anschließend von dem Digitalstift an eine EDV-Einrichtung übertragen werden, mittels derer die digitale Kopie und deren elektronische Signatur erzeugt wird.

Digitales Papier ist ein Papier, das mit einem feinen Raster kleiner Punkte bedruckt ist, wobei die Anordnung der Punkte nach einem vorgegebenen System variiert und eine eindeutige Positionsbestimmung auf dem Papier sowie gegebenenfalls auch eine Ermittlung des jeweiligen Papierbogens ermöglicht. Ein handelsüblicher Digitalstift weist üblicherweise eine in den Digitalstift integrierte Bilderfassungseinheit auf, mit der das bei einem Beschreiben des Papiers mit der Stiftspitze überfahrene Punktraster erfasst und dadurch eine digitale Erfassung der mit dem Digitalstift auf dem digitalen Papier erzeugten Striche und Beschriftungen ermöglicht wird. Im Anschluss an die digitale Erfassung der Striche und Beschriftungen können beispielsweise mit Hilfe einer automatisierten Zeichenerkennung (OCR-Software) die einzelnen Striche in maschinenlesbare und mit den üblichen EDV-Programmen weiter verarbeitbare Informationen umgewandelt werden, die zudem mit einem oftmals sehr geringen Speicherplatzbedarf abgespeichert werden können.

Erfindungsgemäß werden die für eine elektronische Archivierung vorgesehenen Dokumente mit einem Digitalstift auf einem geeigneten digitalen Papier erzeugt. Da der Digitalstift bereits während des Beschreibens des digitalen Papiers bzw. des in Papierform vorliegenden Dokuments eine digitale Kopie der mit dem Digitalstift erzeugten handschriftlichen Informationen erzeugt, können die auf diese Weise gewonnenen und in digitaler Form vorliegenden Informationen an die EDV-Einrichtung übertragen werden, die anschließend aus den in digitaler Form übermittelten handschriftlichen Informationen eine elektronisch signierte digitale Kopie des mit dem Digitalstift beschriebenen Dokuments erzeugt, ohne dass eine Übersendung des Originals des Dokumentes und dessen Zuführung zu dieser EDV-Einrichtung erforderlich ist.

Die elektronisch signierte digitale Kopie der handschriftlichen kann demzufolge innerhalb kürzester Zeit erzeugt werden. Die beschriebenen Dokumente müssen nicht der EDV-Einrichtung zugeführt werden und diese benötigt keine mechanischen Komponenten für die Bearbeitung und elektronische Erfassung der Dokumente, so dass sowohl die Verarbeitungszeit als auch die hierfür anfallenden Kosten erheblich reduziert werden können.

Vorzugsweise ist vorgesehen, dass die von dem Digitalstift erhaltenen handschriftlichen Informationen in maschinenlesbare Informationen umwandelt und die digitale Kopie unter Verwendung der maschinenlesbaren Informationen erzeugt wird. Auf diese Weise können bereits zu einem frühen Zeitpunkt die handschriftlichen Informationen in maschinenlesbare Informationen umgewandelt und beispielsweise in Form von standardisierten XML-Dateien für eine automatisierte Weiterverarbeitung zur Verfügung gestellt werden. Die digitale Kopie kann dann zusätzlich oder - sofern gewünscht - ausschließlich die maschinenlesbaren Informationen zusammenfassen und elektronisch signiert für die Archivierung zusammenstellen.

Zusätzliche Informationen, wie beispielsweise der Zeitpunkt der Erfassung der handschriftlichen Informationen, die Reihenfolge der Erfassung und der Zeitpunkt der Übertragung oder die Anzahl der beteiligten Personen, können mit den bekannten Verfahren nicht erfasst und in der digitalen Kopie gespeichert werden.

Es ist ein wesentlicher Vorteil des erfindungsgemäßen Verfahrens, dass bei der Erstellung der digitalen Kopie zusätzlich Meta-Daten zur Verfügung gestellt und mit der digitalen Kopie gemeinsam abgespeichert werden können, die zu einer weiteren Qualifizierung der Kopie beitragen (beispielsweise Zeitstempel, Anzahl der Digitalstifte etc.).

Die Umwandlung der handschriftlichen Informationen in maschinenlesbare Informationen findet üblicherweise zumindest teilweise bereits in dem Digitalstift statt. Stattdessen oder zusätzlich kann mittels der EDV-Einrichtung eine Überarbeitung und Umwandlung der erhaltenen Informationen in ein geeignetes Datenformat vorgenommen werden.

Als maschinenlesbare Informationen werden hierbei alle denkbaren Datenformate verstanden, die mit einer geeigneten EDV-Einrichtung automatisiert weiterverarbeitet werden können. Dies umfasst einerseits die von einem Digitalstift übermittelten Strichkoordinaten, die in eine Strichgrafik umgesetzt werden können. Andererseits können maschinenlesbare Informationen auch beispielsweise durch eine OCR-Erkennung ermittelt, bzw. erzeugt werden, mittels derer die aus dem Digitalstift übermittelten und zu einer Strichgrafik umgesetzten Informationen ausgewertet und in Buchstaben, Zahlen und Zeichen umgewandelt wurden. Ein geeignetes Datenformat für derartige maschinenlesbare Informationen wäre in diesem Fall das XML-Format. Natürlich sind auch andere Datenformate denkbar, die eine weniger aufwendige Umwandlung in maschinenlesbare Informationen oder aber sogar eine bereits inhaltlich überarbeitete OCR-Erkennung voraussetzen.

Einer besonders vorteilhaften Ausgestaltung des Erfindungsgedankens zufolge ist vorgesehen, dass die maschinenlesbaren Informationen einer automatisierten Inhaltskontrolle unterzogen werden. Auf diese Weise kann sichergestellt werden, dass nur dann eine digitale Kopie der handschriftlichen Informationen elektronisch signiert und der Archivierung zugeführt wird, wenn beispielsweise die handschriftlichen Informationen offensichtlich vollständig und gegebenenfalls inhaltlich sinnvoll bzw. widerspruchsfrei sind.

Eine automatisierte Inhaltskontrolle kann ausgehend von jedem beliebigen maschinenlesbaren Datenformat vorgenommen werden. So ist denkbar, dass im Rahmen einer Inhaltskontrolle lediglich überprüft wird, ob die von einem Digitalstift übermittelten handschriftlichen Informationen auf dem betreffenden digitalen Papier überhaupt in dieser Kombination zulässig sind. Es könnte auch überprüft werden, ob in wichtigen Bereichen des digitalen Papiers handschriftliche Informationen erzeugt und erfasst wurden, also beispielsweise im Unterschriftsfeld eines Formulars eine Eintragung erfolgt ist. Es könnte auch eine automatisierte Inhaltskontrolle vorgesehen sein, die zunächst eine Zuordnung der einzelnen Rohdaten des Digitalstifts zu einem Formular oder sogar eine Umwandlung der Rohdaten in ein XML-Dokument mittels einer geeigneten OCR-Erkennung voraussetzt und die handschriftlichen Informationen auf Vollständigkeit und Widerspruchsfreiheit überprüft. Natürlich könnte auch eine manuelle Inhaltskontrolle bereits zu diesem Zeitpunkt zweckmäßig sein. Weiterhin könnten zusätzliche externe Informationen im Rahmen der Inhaltskontrolle mit den handschriftlichen Informationen verknüpft werden, um bereits bei der anschließend erzeugten digitalen Kopie berücksichtigt zu werden und gegebenenfalls mit abgespeichert zu werden. Es ist denkbar, dass die Ergebnisse der automatisierten Inhaltskontrolle an denjenigen Digitalstift oder dessen Benutzer übermittelt werden, so dass eine zeitnahe Kontrolle der handschriftlichen Informationen und damit gegebenenfalls eine erforderliche Ergänzung oder Korrektur ermöglicht wird.

Einer Ausgestaltung des Erfindungsgedankens zufolge ist vorgesehen, dass die handschriftlichen Informationen in mehreren Informationseinheiten von dem Digitalstift an die EDV-Einrichtung übertragen und zu einer digitalen Kopie zusammengesetzt werden. Die Übermittlung der handschriftlichen Informationen kann beispielsweise in mehrere Informationseinheiten aufgeteilt und jeweils gesondert an die EDV-Einrichtung übermittelt werden, um das Risiko einer fehlerhaften Informationsübermittlung zu minimieren und die Sicherheit und die Zuverlässigkeit der Übermittlung zu verbessern.

Es sind auch Anwendungen denkbar, bei denen beispielsweise die für die digitale Kopie insgesamt erforderlichen handschriftlichen Informationen in räumlichen und/oder zeitlichen Abständen erzeugt werden. Die mit dem Digitalstift erzeugten Informationen können dann jeweils unmittelbar nach deren Erzeugung an die EDV-Einrichtung übermittelt werden, um dort nach Erhalt aller für die digitale Kopie erforderlichen Informationseinheiten zu der digitalen Kopie zusammengesetzt und elektronisch signiert werden zu können.

Gemäß einer besonders vorteilhaften Ausgestaltung des Erfindungsgedankens ist vorgesehen, dass die digitale Kopie zusätzlich Informationen über die zeitliche Anordnung der mit dem Digitalstift erzeugten handschriftlichen Informationen und/oder zusätzliche Informationen über gegebenenfalls mehrere Informationseinheiten umfasst, die zu der digitalen Kopie zusammengesetzt wurden. Werden beispielsweise handschriftliche Informationen in zeitlichen Abständen in ein Formular eingetragen und jeweils unmittelbar, also in mehreren getrennten Informationseinheiten an die EDV-Einrichtung übertragen, so könnten die in jeder Informationseinheit enthaltenen Informationen in gesonderten Ebenen einer im PDF-Format erzeugten digitalen Kopie abgespeichert werden, so dass durch gezieltes Einblenden oder Ausblenden einzelner Ebenen der zeitliche Ablauf bei der Erzeugung der handschriftlichen Informationen sichtbar gemacht werden kann.

Es ist auch denkbar, dass die von dem Digitalstift üblicherweise mit übermittelten Zeitinformationen zu jedem erfassten handschriftlichen Vermerk bei der digitalen Kopie zusätzlich erfasst und abgespeichert werden. Aus diesen zeitlichen Informationen kann zu einem beliebigen späteren Zeitpunkt rekonstruiert werden, wann und in welcher Reihenfolge die handschriftlichen Informationen erzeugt wurden, die in der digitalen Kopie enthalten sind. Natürlich kann auch eine Information über den jeweiligen Digitalstift mit erfasst und abgespeichert werden, mit dem die handschriftlichen Informationen erzeugt und an die EDV-Einrichtung übermittelt wurden, so dass beispielsweise nachträgliche Änderungen oder Korrekturen zeitlich unterschieden und gegebenenfalls verschiedenen Digitalstiften zugeordnet werden können.

Vorzugsweise ist vorgesehen, dass die Informationseinheiten jeweils digital signiert und abgespeichert werden und nach Erhalt eines Startsignals die mehreren digital signierten Informationseinheiten zu einer digitalen Kopie zusammengesetzt werden. Das Startsignal kann dabei beispielsweise von dem Benutzer des Digitalstifts erzeugt und ebenfalls an die EDV-Einrichtung übermittelt werden. Es ist auch möglich, jeweils nach Erhalt einer Informationseinheit automatisiert zu überprüfen, ob bereits alle für eine digitale Kopie erforderliche Informationseinheiten vorliegen und in Abhängigkeit von dem Ergebnis dieser Überprüfung gegebenenfalls ein Startsignal zu erzeugen.

Da die Erzeugung einer digitalen Kopie und das daran anschließende Signieren der digitalen Kopie oftmals mit einem Rechen- und Zeitaufwand der EDV-Einrichtung verbunden sind, können im Hinblick auf eine bessere Auslastung der EDV-Einrichtung der Beginn der Weiterverarbeitung der einzelnen Informationseinheiten zu einer elektronisch signierten digitalen Kopie gesteuert oder geregelt werden. So könnte beispielsweise die Erzeugung der mit einer elektronischen Signatur versehenen digitalen Kopien vorzugsweise dann veranlasst werden, wenn die EDV-Einrichtung nicht anderweitig genutzt wird, so dass beispielsweise nachts automatisiert die elektronische Archivierung der tagsüber erhaltenen und bereits weiterverarbeiteten Informationen durchgeführt wird.

Eine besonders vorteilhaften Ausgestaltung des Erfindungsgedankens zufolge ist vorgesehen, dass die digitale Kopie zusätzlich zu den handschriftlichen Informationen vorgebbare Formularinformationen enthält. In vielen Fällen werden mit dem Digitalstift bereits vorbereitete Formulare ausgefüllt und gegebenenfalls unterschrieben. Die Information, welches Formular mit dem Digitalstift gerade ausgefüllt wird, kann entweder durch Verwendung eines geeigneten digitalen Papiers automatisiert ermittelt werden oder aber durch den Benutzer vor oder nach dem Ausfüllen des Formulars mitgeteilt bzw. vorgegeben werden. Die vorgegebenen Formularinformationen, wie beispielsweise die vorgedruckten Fragen, Felder oder Ausfüllinformationen, müssen nicht jeweils erfasst und zusammen mit den handschriftlichen Informationen an die EDV-Einrichtung übermittelt werden. Die relevanten Formularinformationen können in der EDV-Einrichtung bereitgehalten und bei Erhalt der mit dem Digitalstift erzeugten handschriftlichen Informationen mit diesen verknüpft und für die Erzeugung der digitalen Kopie verwendet werden. Auf diese Weise kann die erforderliche Menge der mittels elektronischer Bilderfassungssysteme aufzunehmenden und in digitale Information umzuwandelnden Informationen erheblich reduziert und auch die zwischen einzelnen elektronischen Datenverarbeitungs-Systemen zu übermittelnden Datenmengen erheblich verringert werden.

Nachfolgend wird ein Ausführungsbeispiel näher erläutert, welches in der Zeichnung dargestellt ist. Es zeigt:
Fig. 1 eine schematische Darstellung eines erfindungsgemäßen Verfahrens zur Erzeugung einer mit einer elektronischen Signatur versehenen digitalen Kopie handschriftlich erzeugter Informationen und
Fig. 2. Ein schematisches Flussdiagramm für die mittels einer EDV-Einrichtung durchgeführten Verfahrensschritte zur Erzeugung einer mit einer elektronischen Signatur versehenen digitalen Kopie.

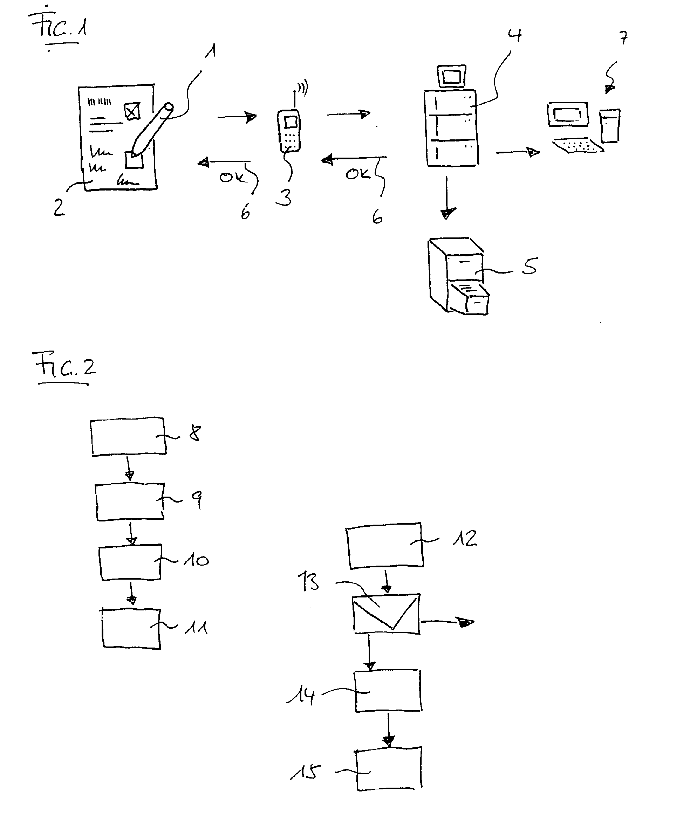

Bei einem in Figur 1 schematisch dargestellten Verfahren zur Erzeugung einer mit einer elektronischen Signatur versehenen digitalen Kopie werden in einem ersten Verfahrensschritt Angaben und Informationen mittels eines Digitalstifts 1 auf einem digitalen Papier 2 handschriftlich vermerkt. Die handschriftlichen Vermerke werden von dem Digitalstift 1 bereits während des Beschreibens des digitalen Papiers 2 in digitale Informationen überführt und in dem Digitalstift 1 zwischengespeichert.

Die elektronisch erfassten und in digitale Informationen überführten, beziehungsweise in dieser Form zwischengespeicherten handschriftlichen Informationen werden anschließend von dem Digitalstift 1 zu einer geeigneten Sendeeinrichtung 3 und von dieser zu einer EDV-Einrichtung 4 übermittelt. Die Sendeeinrichtung 3 kann beispielsweise ein handelsübliches Mobilfunkgerät sein. Die digitalisierten Informationen können mittels der üblichen Übermittlungsprotokolle von dem Digitalstift 1 an die Sendeeinrichtung 3 und zu der EDV-Einrichtung 4 übertragen werden.

Es ist auch denkbar, dass die digitalen Informationen unmittelbar von dem Digitalstift 1 an die EDV-Einrichtung 4 übermittelt werden oder dass anstelle eines handelsüblichen Mobilfunkgeräts als zwischengeschaltete Sendeeinrichtung 3 eine beliebige andere, geeignete Sendeeinrichtung 3 verwendet wird. Auch eine drahtgebundene Datenübermittlung beispielsweise in Verbindung mit einer Docking-Station für den Digitalstift 1, ist denkbar und insbesondere im Hinblick auf die Datensicherheit möglicherweise vorteilhaft.

Die empfangenen Informationen werden von der EDV-Einrichtung 4 beispielsweise gemäß einem nachfolgend näher erläuterten Verfahren ausgewertet und weiter verarbeitet, so dass schließlich eine digitale Kopie der handschriftlich erzeugten Informationen erstellt und mit einer elektronischen Signatur versehen wird. Diese elektronisch signierte digitale Kopie kann dann an eine geeignete Archivierungs-Einrichtung übermittelt und dort abgespeichert, beziehungsweise dauerhaft aufbewahrt werden.

Vor, während oder im Anschluss zu der Erzeugung der digitalen Kopie können die handschriftlichen Informationen in eine maschinenlesbar und automatisiert weiterverarbeitbare Form umgewandelt werden. In dieser Form können die handschriftlichen Informationen einer automatisierten Inhaltskontrolle unterzogen werden und ebenfalls automatisiert eine Rückmeldung 6 an die Sendeeinrichtung 3, beziehungsweise den Digitalstift 1 übermittelt werden. Die umgewandelten handschriftlichen Informationen können in maschinenlesbarer Form auch an andere EDV-Systeme 7 übermittelt und dort weiterverarbeitet werden, beziehungsweise in nahezu beliebiger Form für eine Weiterverarbeitung zur Verfügung gestellt werden.

Die Datenübermittlung zwischen dem Digitalstift 1 und der Sendeeinrichtung 3, beziehungsweise der EDV-Einrichtung 4 kann je nach den Anforderungen des Einzelfalls mit einer elektronischen Signatur und/oder verschlüsselt erfolgen. Hierbei können die bekannten elektronischen Signaturverfahren sowie die bekannten Verschlüsselungsverfahren verwendet werden. Die jeweils zu übertragenden Datenmengen sind dabei ausreichend klein, so dass in den meisten Anwendungsfällen eine schnelle Bearbeitung und Übermittlung der zu übertragenden Informationen gewährleistet werden kann.

Sofern eine qualifizierte Signatur der handschriftlich erzeugten Informationen erforderlich ist, können die mit dem Digitalstift 1 erzeugten handschriftlichen Informationen an die EDV-Einrichtung 4 übertragen und dort in geeigneter Weise aufbereitet, beziehungsweise zu einem vollständigen elektronischen Dokument zusammengesetzt werden. Das elektronische Dokument kann dann beispielsweise als E-Mail an einen für eine qualifizierte Signatur berechtigten Benutzer übertragen und von diesem qualifiziert signiert werden, um im Anschluss daran erneut an die EDV-Einrichtung 4 übermittelt zu werden.

In vielen Fällen dürfte es zweckmäßig sein, dass das mit dem Digitalstift 1 zu beschreibende digitale Papier 2 bereits ein vorbereitetes Formular enthält. Die Formularinformationen können zweckmäßigerweise in der EDV-Einrichtung 4 hinterlegt oder in geeigneter Weise zur Verfügung gestellt werden. Die mit dem Digitalstift 1 in dem Formular erzeugten handschriftlichen Informationen können dann während einer ersten Erfassung und Verarbeitung mittels der EDV-Einrichtung 4 mit den zugeordneten Formularinformationen kombiniert werden, so dass die digitale Kopie, die mit der EDV-Einrichtung 4 erzeugt wird, sowohl die handschriftlichen Informationen als auch die Formularinformationen enthält und wieder geben kann. Eine vollständige Übermittlung der Formularinformationen ist dann regelmäßig nicht erforderlich. Es sind bereits geeignete Verfahren zur automatisierten Codierung, beziehungsweise Identifizierung von Formularinformationen anhand einer geeigneten Kennzeichnung des digitalen Papiers 2 bekannt und für eine Verwendung in dem vorangehend beschriebenen Zusammenhang geeignet.

In Figur 2 werden lediglich beispielhaft einzelne Verfahrensschritte näher erläutert, die im Rahmen der Erfassung und Verarbeitung der handschriftlich erzeugten Informationen mittels der EDV-Einrichtung 4 durchgeführt werden können. In einem ersten Verfahrensschritt 8 werden die mit einem Digitalstift 1 erzeugten handschriftlichen Informationen nach ihrer Übertragung an die EDV-Einrichtung 4 erfasst und mit einer eindeutigen Identifizierung, beziehungsweise Signatur versehen. In einem anschließenden Verfahrensschritt 9 werden die handschriftlich erzeugten Informationen in eine maschinenlesbare Form überführt und beispielsweise eine XML-Datei erzeugt, bei der die handschriftlichen Informationen bereits in digitaler und automatisiert weiterverarbeitbarer Form vorliegen. Im Anschluss daran wird in einem weiteren Verfahrensschritt 10 eine ebenfalls automatisiert erfolgende Inhaltskontrolle durchgeführt. Diese Inhaltskontrolle kann entweder auf eine Überprüfung der Vollständigkeit der übermittelten handschriftlichen Informationen beschränkt sein oder aber bereits eine erste inhaltliche Überprüfung beinhalten. Das Ergebnis dieser Inhaltskontrolle kann ebenfalls in der erzeugten XML-Datei hinterlegt und gegebenenfalls an den Benutzer des Digitalstiftes 1 oder an eine beliebige Kontrollinstanz übermittelt werden.

Die Erfassung und Vorbereitung der handschriftlich erzeugten Informationen wird in einem nachfolgenden Verfahrensschritt 11 abgeschlossen, bei dem die erzeugte XML-Datei elektronisch signiert und für eine Weiterverarbeitung bereits gehalten wird. Zusätzlich kann die XML-Datei mit einer Kennzeichnung versehen werden, dass diese Datei noch nicht eine digitale Kopie mit elektronischer Signatur überführt wurde und dies bei nächster Gelegenheit erfolgen sollte.

Entweder in vorgebaren zeitlichen Abständen oder automatisiert, beziehungsweise manuell ausgelöst können alle in der vorangehend beschriebenen Weise vorbereiteten XML-Dateien mittels einem nachstehend beschriebenen Verfahren in eine digitale Kopie überführt werden. Dabei wird in einem ersten Verfahrensschritt 12 zunächst überprüft, ob eine noch nicht abschließend bearbeitete XML-Datei sämtliche Informationen enthält, die für die Erzeugung einer digitalen Kopie erforderlich sind. Anderenfalls würden die weiteren XML-Dateien zusammen gestellt und die jeweils enthaltenen Informationen in geeigneter Weise kombiniert werden müssen.

In einem nachfolgenden Verfahrensschritt 13 wird überprüft, ob die Signaturen der XML-Dateien, die in eine digitale Kopie überführt werden sollen, zulässig sind und der Ursprung und die Integrität der darin enthaltenen Informationen gewährleistet ist. In dem unwahrscheinlichen Fall, dass eine XML-Datei keine zulässige Signatur aufweist, könnte eine entsprechende Benachrichtigung erzeugt und ein manuelles Eingreifen erforderlich werden.

In dem zu erwartenden Fall, dass alle Signaturen zulässig sind, wird in einem anschließenden Verfahrensschritt die digitale Kopie der handschriftlich erzeugten Informationen erstellt und mit einer elektronischen Signatur versehen. In einem abschließenden Verfahrensschritt 15 kann die digitale Kopie einem geeigneten Archivierungssystem zugeführt werden.

## Patentansprüche

1. Verfahren zur Erzeugung einer mit einer elektronischen Signatur versehenen digitalen Kopie handschriftlich erzeugter Informationen, wobei die digitale Kopie in einem vorgebbaren Format erzeugt wird und wobei die elektronische Signatur die Übereinstimmung der digitalen Kopie mit den handschriftlichen Informationen bestätigt, **dadurch gekennzeichnet, dass** die handschriftlichen Informationen mit einem Digitalstift (1) auf einem digitalen Papier (2) erzeugt und anschließend von dem Digitalstift (1) an eine EDV-Einrichtung (4) übertragen werden, mittels derer die digitale Kopie und deren elektronische Signatur erzeugt wird.

2. Verfahren nach Anspruch 1, **dadurch gekennzeichnet, dass** in einem Zwischenschritt die von dem Digitalstift (1) erhaltenen handschriftlichen Informationen in maschinenlesbare Informationen umgewandelt werden und die digitale Kopie unter Verwendung der maschinenlesbaren Informationen erzeugt wird.

3. Verfahren nach Anspruch 2, **dadurch gekennzeichnet, dass** die maschinenlesbaren Informationen einer automatisierten Inhaltskontrolle unterzogen werden.

4. Verfahren nach einem der vorangehend genannten Ansprüche, **dadurch gekennzeichnet, dass** die handschriftlichen Informationen in mehreren Informationseinheiten von dem Digitalstift (1) an die EDV-Einrichtung (4) übermittelt und zu einer digitalen Kopie zusammengesetzt werden.

5. Verfahren nach Anspruch 4, **dadurch gekennzeichnet, dass** die Informationseinheiten jeweils digital signiert und abgespeichert werden und nach Erhalt eines Startsignals die mehreren digital signierten Informationseinheiten zu einer digitalen Kopie zusammengesetzt werden.

6. Verfahren nach einem der vorangehenden Ansprüche, **dadurch gekennzeichnet, dass** die digitale Kopie zusätzlich zu den handschriftlichen Informationen vorgebare Formularinformationen enthält.

7. Verfahren nach einem der vorangehenden Ansprüche, **dadurch gekennzeichnet, dass** die digitale Kopie zusätzlich Informationen über die zeitliche Anordnung der mit dem Digitalstift (1) erzeugten handschriftlichen Informationen und/oder zusätzliche Informationen über gegebenenfalls mehrere Informationseinheiten umfasst, die zu der digitalen Kopie zusammengesetzt wurden.
